# EUROPÄISCHE PATENTSCHRIFT

(11) **EP 0 475 059 B1**
(45) Veröffentlichungstag und Bekanntmachung des Hinweises auf die Patenterteilung: **17.05.1995**
(21) Anmeldenummer: 91112969.0
(22) Anmeldetag: 01.08.1991
(51) Int. Cl.: A47J 43/28

(54) **Kochlöffel**
Cooking spoon
Cuillère de cuisine

(30) Priorität: 24.08.1990 DE 4026835
(43) Veröffentlichungstag der Anmeldung: 18.03.1992
(73) Patentinhaber: Rösle Metallwarenfabrik GmbH & Co. KG, D-87616 Marktoberdorf (DE)
(72) Erfinder: Schäfer, Erhard, D-87616 Marktoberdorf (DE)
(74) Vertreter: Weickmann, Heinrich, Dipl.-Ing.

(56) Entgegenhaltungen:
- DE-C- 842 253
- DE-U- 1 666 681
- DE-U- 8 405 668
- GB-A- 321 868
- US-A- 2 836 402

## Beschreibung

Die Erfindung betrifft einen Kochlöffel, insbesondere zum Rühren von Kochgut, umfassend einen Stiel und ein Paddelteil, wobei das Paddelteil ein Paddelzentralteil und eine zumindest dem stielfernen Umfangsbereich des Paddelzentralteils vorgelagerte Hülldrahtanordnung mit stetig verlaufender Eingriffsliniengestaltung für den Eingriff mit Begrenzungsflächen eines Rührgutaufnahmegefäßes umfaßt, wobei die Hülldrahtanordnung von einer einzigen Drahtschlinge gebildet ist.

In den Küchen von Restaurants und Hotels werden heute Kochlöffel aus verschiedenen Werkstoffen verwendet, deren Paddelteile jeweils durch eine geschlossene Fläche gebildet sind. Das Paddelteil ist hierdurch verhältnismäßig starr. Wird mit einem derartigen Kochlöffel in einem Kochgerät gerührt, auf dessen Boden sich bereits ein fester Ansatz angebrannten Kochgutes gebildet hat, so besteht die Möglichkeit, daß dieses angebrannte Kochgut durch den relativ starren Kochlöffel von dem Boden abgekratzt und mit dem noch einwandfreien Kochgut verrührt wird. Hierdurch können sich erhebliche Geschmackseinbußen ergeben. Dies gilt auch für nur angedicktes Kochgut, das beim Abkratzen in der Regel schon zu einer Geschmacksbeeinträchtigung führt.

Im Bereich privater Haushalte finden sich insbesondere Kochlöffel aus Holz oder Kunststoff. Auch bei einem Kochlöffel aus Kunststoff besteht die Gefahr, daß bei dem Rührvorgang angebranntes Kochgut abgekratzt wird, da dieser ebenfalls ein verhältnismäßig starres Paddelteil aufweist. Darüber hinaus kann dieser Kochlöffel schmelzen, wenn er beispielsweise versehentlich auf der Herdplatte abgelegt wird. Des weiteren kann sich ein Kochlöffel aus Kunststoff aufgrund der Kochtemperatur oder der Einwirkung von Speisesäuren verfärben. Bei Kochlöffeln aus Holz besteht zwar die Gefahr des Abkratzens angebrannten Kochgutes nicht in dem Maße wie bei Kochlöffeln aus Plastik, doch kann bei diesen zum einen durch die im Laufe der Zeit eintretende Rauheit der Oberfläche die Hygiene nicht mehr so gewährleistet sein, wie dies gewünscht wird. Zum anderen kann das Holz leicht splittern, wodurch einzelne Splitter in das Kochgut gelangen können oder der Koch sich verletzen kann. Darüber hinaus können sich die Stiele derartiger Kochlöffel aus Holz verziehen.

Es sind bereits Tellerbesen aus Metall zum Schlagen beispielsweise dünnflüssiger Saucen bekannt, die ein Vorderteil aus Drahtschlingen aufweisen. Die Drahtschlingen sind dabei in mehreren zueinander beabstandeten Parallelebenen angeordnet. Derartige Tellerbesen eigenen sich nicht als Kochlöffel da sie entsprechend ihrer ihnen zugedachten Funktion eine für Kochlöffel ungeeignete Längenverteilung von Paddel und Stiel haben. Für Kochlöffel wird insbesondere gefordert, daß das Paddelteil in Relation zur Stiellängsrichtung verhältnismäßig kurz ist. Die Länge des Paddelteils in Längsrichtung des Stiels sollte in der Regel kleiner sein als ein Drittel der Gesamtlänge des Kochlöffels.

Zur Ausführung von Küchengeräten mit einem aus Draht hergestellten Paddelteil kann beispielsweise auf die deutsche Gebrauchsmusterschrift 16 66 681 verwiesen werden. Dort ist das Paddelteil von einer Drahtspirale gebildet, die längs des gesamten Spiralverlaufs einen gleichmäßigen Querschnittsdurchmesser besitzt. Um die Rühraufgabe zu erfüllen, muß das Paddel verhältnismäßig steif sein. Dies bedeutet, daß der äußerste Umlauf der Spirale im wesentlichen die gleiche Steifigkeit besitzt wie der Zentralteil der Spirale. Wegen der notwendigen Gesamtsteifigkeit besteht deshalb die Gefahr, daß beim Rühren Kochgut, das sich in der Topfinnenfläche, insbesondere am Topfboden, angesetzt hat, in unerwünschter Weise abgekratzt und aufgewirbelt wird.

Aus der DE 84 05 668.1 U ist ein Soßenanrührer bekannt, bei welchem ein vorderer Stieldraht zu einer offenen Schlinge geformt ist und diese Schlinge von einer Hülldrahtspirale umwickelt ist.

Aus der DE 842 253 A2 ist ein Küchengerät zur Verwendung als Schaumschläger und Besteckzange bekannt, bei dem jeder der Zangenschenkel von einer Mehrzahl von im wesentlichen koplanaren Drahtschlingen gebildet ist, welche untereinander gleichen Querschnitt haben. Dabei hat zwar die äußerste Schlinge aufgrund ihrer größeren Ausladung andere Elastizitätseigenschaften als die weiter innen liegenden Schlingen. Es besteht aber nicht die Möglichkeit, ohne Rücksicht auf den Schlingenabstand die äußerste Schlinge beliebig biegeweich zu machen.

Der Erfindung liegt die Aufgabe zugrunde, einen Kochlöffel der eingangs genannten Art zu schaffen, bei dem hinsichtlich der Form der Anordnung der Komponenten weitestgehende Gestaltungsfreiheit besteht und bei dem andererseits die Gefahr eines Abkratzens angebrannten oder eingedickten Ansatzes von Kochgut vermieden werden kann.

Zur Lösung dieser Aufgabe wird vorgeschlagen, daß die Biegesteifigkeit der das Paddelzentralteil bildenden Elemente querschnittsbedingt größer ist als die Biegesteifigkeit der Hülldrahtanordnung, in dem das Paddelzentralteil entweder von einem flächigen Material oder von einem Zentraldrahtmaterial gebildet ist, welches insbesondere bei Betrachtung in Richtung senkrecht zur Paddelebene, im Querschnitt stärker ist als das entsprechende Querschnittsmaß des Hülldrahtmaterials.

Man kann das Prinzip der Erfindung auch so verstehen, daß der vorgelagerte deformationsweiche Hülldraht dem Benutzer ein unübersehbares Zeichen gibt, wenn der Kochlöffel die Topfinnenfläche, insbesondere den Topfboden, erreicht hat, so daß er nicht Gefahr läuft, durch weiteres Andrücken des Kochlöffels gegen die jeweilige Topfinnenwand das steifere Paddelzentralteil zur Anlage an der jeweiligen Topfwand zu bringen. Auf diese Weise kann das Abkratzen von angelegtem Kochgut mit Sicherheit vermieden werden. Die Deformationsweichheit des Hülldrahts wird vorzugsweise so eingestellt, daß ein Abkratzen von Kochgut nicht zu befürchten ist. Insbesondere im professionellen Bereich können Kochlöffel mit Hülldrähten unterschiedlicher Steifigkeit für verschiedene Rühraufgaben bereitgestellt werden.

Bezüglich des Paddelzentralteils kann die Steifigkeit so gewählt werden, daß auch bei zähflüssigem Kochgut die Rühraufgabe untadelig erfüllt werden kann.

Da in der Regel nicht nur eine Berührung mit dem Topfboden, sondern auch mit der Topfinnenwand zu erwarten ist, wird weiter vorgeschlagen, daß dem Paddelzentralteil im wesentlichen auf seinem gesamten an den Stiel anschließenden Umfangsbereich ein Hülldraht vorgelagert ist.

Der Hülldraht kann von einer Hülldrahtschlinge mit zwei einen Teil des Stiels bildenden Hülldrahtträgerschenkeln gebildet sein. Dies bedeutet, daß die Deformationsweichheit teilweise von der Schlinge selbst, teilweise aber auch von dem Hülldrahtträgerschenkel erbracht werden kann.

Das Paddelzentralteil kann, wie bei einem herkömmlichen Kochlöffel aus Holz, von einem flächigen Material gebildet sein, welches innerhalb seines Außenumfangs im wesentlichen keinen Durchfluß von Kochgut gestattet. Beispielsweise kann das Paddelzentralteil von einem Blechzuschnitt aus rostfreiem Stahlblech gebildet sein, wobei dieser Blechzuschnitt mit einem stielbildenden Verlängerungsfortsatz ausgeführt sein kann. Bei dieser Ausführungsform ist die Rührfunktion genauso gewährleistet, wie bei einem Holzkochlöffel. Andererseits besteht trotz der relativ scharfen Kanten des Paddelzentralteils keine Gefahr eines Abkratzens von an der Topfinnenwand angelegtem Kochgut.

Alternativ kann das Paddelzentralteil auch von einem Zentraldrahtmaterial gebildet sein, wobei das Zentraldrahtmaterial des Paddelzentralteils steifer ist als das Hülldrahtmaterial. Bei dieser Ausführungsform kann die Rührfunktion durch Variation der Dichte und Verteilung des Drahtmaterials im Paddelzentralteil an die verschiedensten Kochaufgaben angepasst werden, insbesondere an verschiedene Viskositäten des Kochguts. Die Dichte des Drahtmaterials im Paddelzentralteil kann beispielsweise auch dadurch beeinflußt werden, daß im Paddelzentralteil der Draht mit einem länglichen, insbesondere eliptischen Querschnitt ausgeführt wird, wobei die lange Achse des Querschnitts parallel zur Paddelebene liegt.

Die unterschiedliche Steifigkeit von Hülldraht- und Zentraldrahtmaterial läßt sich dadurch leicht erreichen, daß das Querschnittsmaß des Zentraldrahtmaterials zumindest bei Betrachtung in Richtung senkrecht zur Paddelfläche größer ist als das entsprechende Querschnittsmaß des Hülldrahtmaterials.

Bevorzugt wird im Hinblick auf eine kostengünstige Bereitstellung des Drahtmaterials sowohl der Hülldraht als auch der Zentraldraht mit kreisförmigem Querschnitt eingesetzt.

Auch das Paddelzentralteil kann von mindestens einer Zentraldrahtschlinge mit Zentraldrahtträgerschenkeln gebildet sein, welche einen Teil des Stiels bilden. Um eine kochlöffelgerechte möglichst flache Form des Paddelteils zu erhalten, wird weiter vorgeschlagen, daß die Zentraldrahtträgerschenkel der Zentraldrahtschlinge und die Hülldrahtträgerschenkel der Hülldrahtschlinge in einer Ebene parallel nebeneinander angeordnet sind und einen Teil des Stiels bilden.

Die Steifigkeit der Hülldrahtträgerschenkel und damit des Hülldrahts kann beeinflußt werden dadurch, daß die Hülldrahtträgerschenkel an den Zentraldrahtträgerschenkeln gegen Ausweichen senkrecht zur Paddelfläche abgestutzt sind. Dabei ist es möglich, daß die Hülldrahtträgerschenkel an den Zentraldrahtträgerschenkeln durch ein Stützelement abgestützt sind, welches in Längsrichtung des Stiels verschiebbar ist. Durch diese letztere Maßnahme läßt sich ein und derselbe Kochlöffel an verschiedene Rühraufgaben anpassen.

Entsprechend der herkömmlichen Form eines Kochlöffels ist vorgesehen, daß die Paddelfläche im wesentlichen plan und parallel zur Längserstreckung des Stiels ist. Es kann aber auch die Paddelfläche mit einem Knick oder einer Krümmung ausgeführt sein, etwa in der Weise, daß die Knickachse bzw. Krümmungsachse im wesentlichen senkrecht zur Längserstreckung des Stiels verläuft. Auf diese Weise läßt sich ein Kochlöffel gewinnen, der ggf. auch zum Schlagen oder Mischen oder als Schaufel geeignet ist.

Der Kochlöffel kann in herkömmlicher Weise mit einem Griff versehen sein. Der Griff kann aus beliebigem Werkstoff hergestellt sein, beispielsweise aus Kunststoff oder Holz. Bevorzugt wird aber der Griff, ebenso wie das Paddelteil, aus rostfreiem Stahl hergestellt und zwar insbesondere aus hygienischen Gründen.

Ist der Griff aus wärmeleitfähigem Material hergestellt, so empfiehlt es sich, zwischen dem Paddelteil und dem Griff eine Wärmeisolierung vorzunehmen, insbesondere dadurch, daß der Paddelteil bzw. der einstückig mit dem Paddelteil hergestellte Stiel unter Verwendung von wärmeisolierendem Material in dem Griff eingebettet ist.
Der Hülldraht kann zu verschiedenen Formen von Hülldrahtschlingen geformt sein.

Es besteht die Möglichkeit, daß der Hülldraht eine im wesentlichen kreisförmige Hülldrahtschlinge bildet.

Es besteht weiter die Möglichkeit, daß der Hülldraht eine asymmetrische Hülldrahtschlinge bildet, welche auf der einen Seite der Stielachse einen nach außen konvexen, kurvenförmigen Verlauf besitzt und auf der anderen Seite der Stielachse einen zur Stielachse im wesentlichen parallelen Abschnitt besitzt.

Es besteht weiter die Möglichkeit, daß der Hülldraht eine symmetrische Drahtschlinge bildet, welche sich vom Stiel ausgehend zunächst erweitert, sodann parallel beiderseits der Stielachse verläuft und am stielfernen Ende einen zur Stielachse im wesentlichen orthogonalen Abschnitt besitzt.

Es besteht weiter die Möglichkeit, daß der Hülldraht eine asymmetrische Hülldrahtschlinge bildet, welche ausgehend vom Stiel zunächst orthogonal zur Stielachse von dieser in beiden Richtungen weg verläuft, sodann beidseits der Stielachse im wesentlichen parallel zu dieser verläuft und im stielfernen Bereich durch einen spitzwinkelig zur Stielachse verlaufenden ggf. konvexen Abschnitt geschlossen ist.

Um einen allseitigen Berührungsschutz gegen Berührung des steiferen Paddelzentralteils mit der Topfinnenwand zu schaffen, wird weiter vorgesehen, daß der Hülldraht im wesentlichen äquidistant zur Einhüllenden des Umfangs des Paddelzentralteils verläuft.

Um dem Paddelzentralteil die Erfüllung einer intensiven Rührfunktion zu vermitteln, kann vorgesehen sein, daß das Paddelzentralteil von einer Mehrzahl von Zentraldrahtschlingen gebildet ist. Dabei können die Zentraldrahtschlingen annähernd geometrisch ähnlich zu einer Hülldrahtschlinge sein.

Der für das Rühren erforderliche Durchflußwiderstand im Bereich des Paddelzentralteils kann aber auch dadurch eingestellt werden, daß das Paddelzentralteil mindestens eine in ihrer Ebene mehrfach gekrümmte Zentraldrahtschlinge umfaßt. Dabei ist es denkbar, daß die mehrfach gekrümmte Zentraldrahtschlinge wellenförmigen Krümmungsverlauf besitzt. Die Wellenflanken können hierbei im wesentlichen parallel zueinander sein.

Eine weitere Möglichkeit, um mit einer oder einigen wenigen Zentraldrahtschlingen im Paddelzentralteil einen ausreichenden Durchflußwiderstand zu schaffen, besteht darin, daß die Zentraldrahtschlinge von mehreren Schlingenabschnitten gebildet ist, welche in unterschiedlichen Abständen von einer Hülldrahtschlinge angeordnet sind, der Hülldrahtschlinge jeweils annähernd äquidistant folgen und durch jeweils einen Umkehrscheitel miteinander verbunden sind.

Der Querschnittdurchmesser des Hülldrahts liegt je nach Rühraufgabe zwischen ca. 0,8 mm bis ca. 2,0 mm, vorzugsweise ca. 1,2 mm bis ca. 1,6 mm.

Der Querschnittsdurchmesser des Zentraldrahtmaterials liegt je nach Rühraufgabe zwischen ca. 2,0 mm bis ca. 4,0 mm, vorzugsweise zwischen ca. 2,5 mm bis ca. 3,5 mm.

Es ist grundsätzlich auch möglich, daß das Paddelzentralteil aus Drahtteilen unterschiedlichen Querschnittsdurchmessers besteht, wobei der Querschnittsdurchmesser vom Außenumfang des Paddelzentralteils zu dessen Mitte hin zunimmt. Man kann eine solche Ausführungsform auch dahin verstehen, daß mehrere Hülldrähte zunehmender Steifigkeit von dem Außenumfang des Paddelteils zum Zentrum des Paddelteils hin aufeinanderfolgen, so daß die Schutzfunktion des äußersten Hülldrahts unter Umständen auch noch von einem zweiten oder dritten Hülldraht ergänzt werden kann.

Es ist denkbar, den Hülldraht mit einem länglichen insbesondere eliptischen Querschnitt auszuführen, dessen Längsquerschnittsachse senkrecht zur Paddelebene liegt. Auf diese Weise wird die Schmiegung des Hülldrahts an die jeweilige Topfinnenfläche verbessert und die Abschabegefahr weiter vermindert.

Die verschiedenen Schlingenformen des Hülldrahts dienen insbesondere auch der Anpassung an verschiedene Formen von Kochtöpfen.

Die vorliegenden Figuren erläutern die Erfindung anhand von Ausführungsbeispielen.

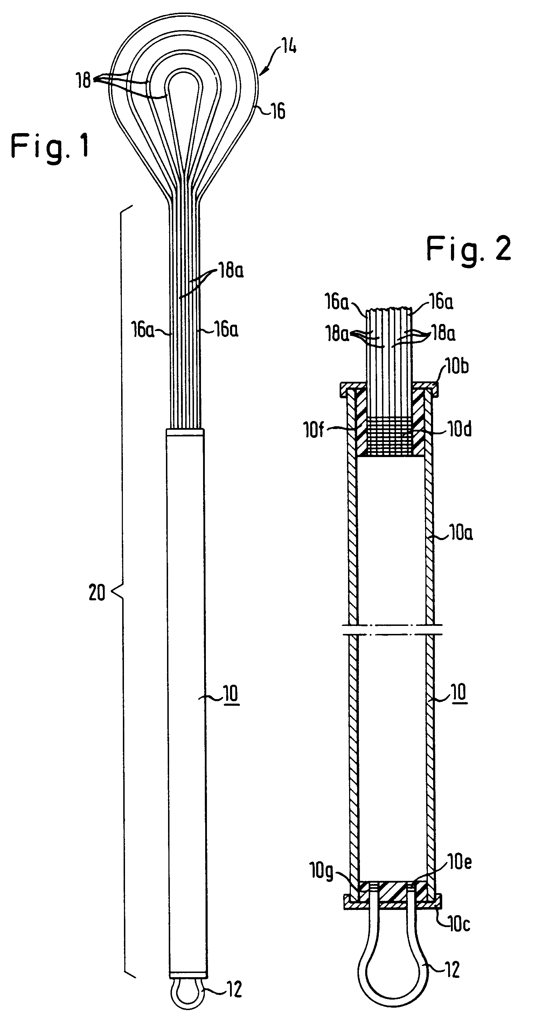

In Figur 1 erkennt man einen Kochlöffel mit einem Griff 10 und einer Aufhängeöse 12. Der Kochlöffel umfaßt ein Paddelteil, das ganz allgemein mit 14 bezeichnet ist. Dieses Paddelteil 14 ist von einer Hülldrahtschlinge 16 und Zentraldrahtschlingen 18 gebildet. Die Hülldrahtschlinge 16 ist mit Hülldrahtträgerschenkeln 16a einstückig ausgeführt, die Zentraldrahtschlingen 18 sind mit Zentraldrahtträgerschenkeln 18a ausgeführt. Das Drahtmaterial der Hülldrahtschlinge 16 ist im Querschnitt schwächer als das Drahtmaterial der Zentraldrahtschlingen 18. Aus Figur 2 erkennt man, daß die Trägerschenkel 16a und 18a in einer Ebene liegen und in dem Griff 10 eingebettet sind. Der Griff 10 besteht aus einem Edelstahlrohr 10a, dessen Enden durch je eine aufgepresste Haube 10b bzw. 10c abgeschlossen sind. Die Enden der Trägerschenkel 16a und 18a sind im Bereich 10d bzw. 10e aufgerauht und in einer Masse 10f aus gehärtetem Kunststoff verankert. In ähnlicher Weise ist die Öse 12 in gehärtetem Kunststoff 10g verankert.

Die Ebene der Öse 12 liegt parallel zur Anordnungsebene der Trägerschenkel 16a, 18a und der Drahtschlingen 16,18. Die Gesamtheit des Griffs 10 und der Trägerschenkel 16a, 18a wird als Stiel 20 bezeichnet.

In den folgenden Figuren sind analoge Teile jeweils mit gleichen Bezugszeichen versehen wie in Figuren 1 und 2, jeweils vermehrt um 100, 200, 300 usw.

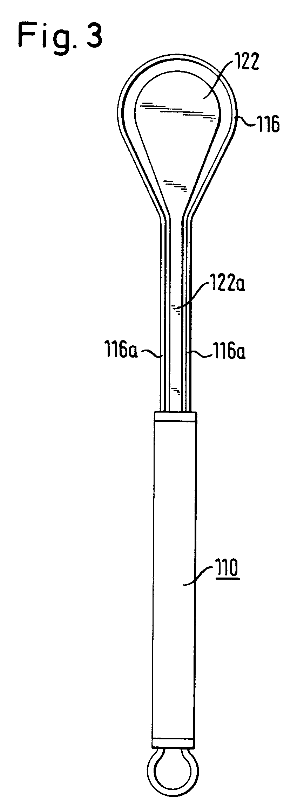

In Figur 3 ist ein Paddelzentralteil mit 122 bezeichnet. Dieses Paddelzentralteil ist aus Edelstahlblech hergestellt mit einem Verlängerungsfortsatz 122a, der in den Griff 110 eingesetzt ist. Das Paddelzentralteil 122 ist von einem Hülldraht 116 mit Hülldrahtträgerschenkeln 116a gebildet. Die Hülldrahtschlinge 116 verläuft annähernd äquidistant zu dem Umfang des Paddelzentralteils 122.

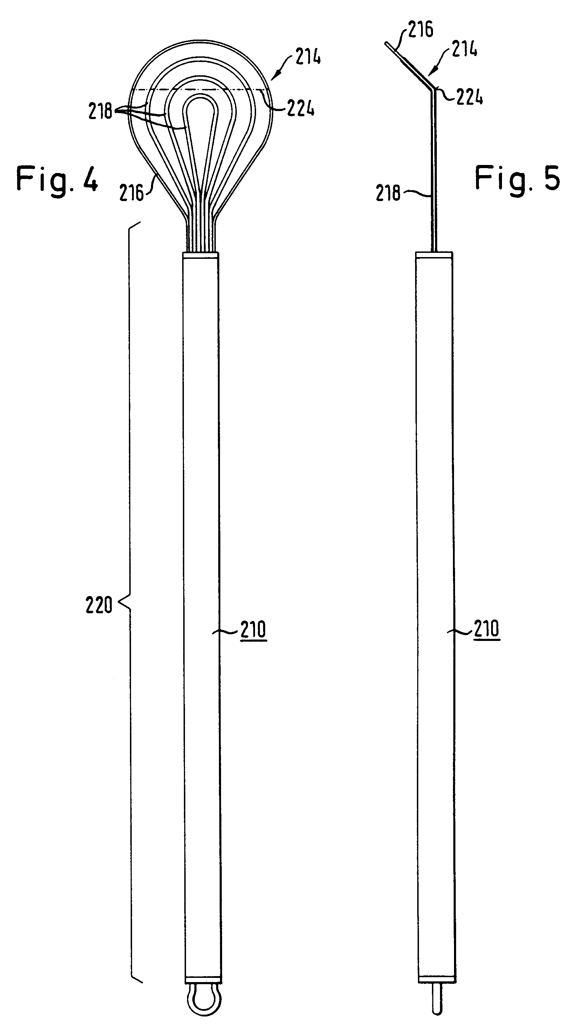

In Figuren 4 und 5 erkennt man eine Ausführungsform, bei welcher das Paddelteil 214 ähnlich ausgeführt ist wie in Figur 1, jedoch ist das Paddelteil längs einer Knicklinie 224 abgeknickt. Der Griff 210 ist hier verlängert.

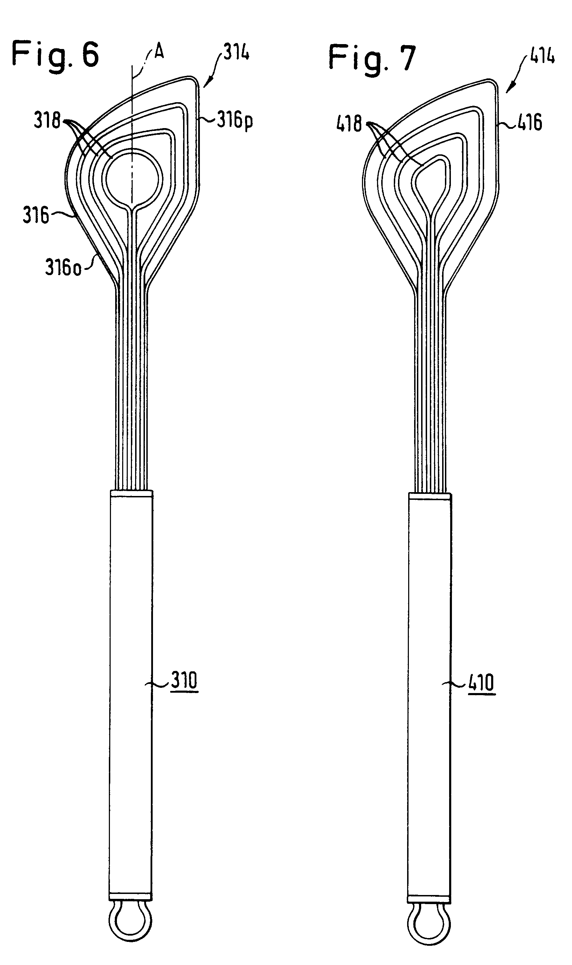

In Figur 6 erkennt man eine Ausführungsform, bei der die Hülldrahtschlinge 316 einen konvex gekrümmten Abschnitt 316o auf der einen Seite der Stielachse A und einem geradlinigen Abschnitt 316p auf der anderen Seite der Stielachse A aufweist. Die Zentraldrahtschlingen 318 sind zur Hülldrahtschlinge geometrisch annähernd ähnlich, nur die innerste Zentraldrahtschlinge 318 ist als Kreisschlinge ausgeführt.

Figur 7 unterscheidet sich von Figur 6 nur dadurch, daß auch die innerste Zentraldrahtschlinge 418 geometrisch ähnlich zur Hülldrahtschlinge 416 ausgeführt ist.

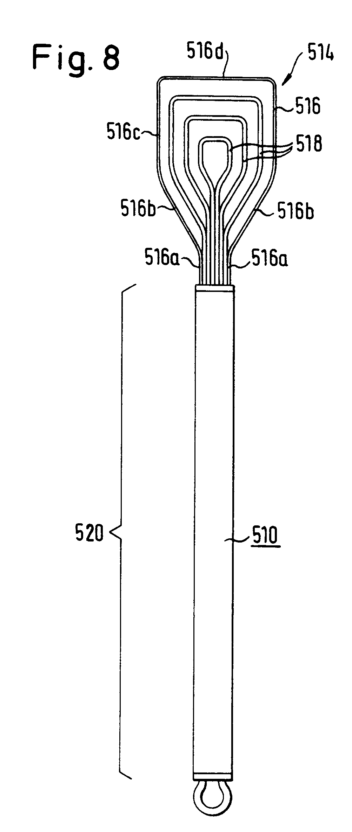

In Figur 8 ist die Hülldrahtschlinge 516 im Umriß flaschenförmig ausgebildet mit divergierenden Schenkeln 516b und daran anschließenden geradlinigen Schenkeln 516c und einem Querschenkel 516d. Die Zentraldrahtschlingen 518 sind geometrisch ähnlich ausgeführt.

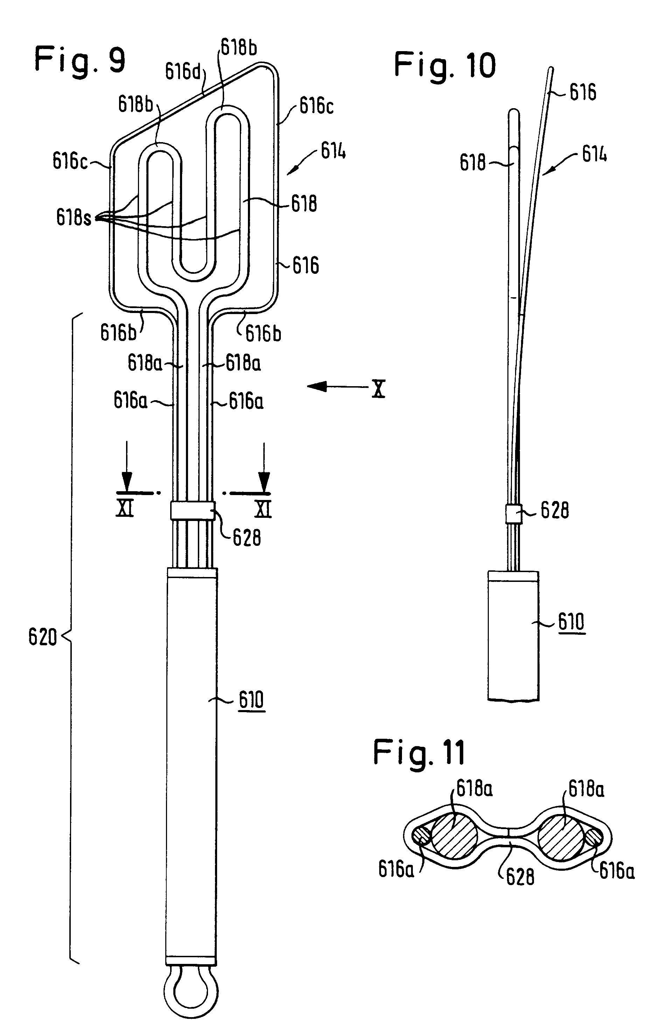

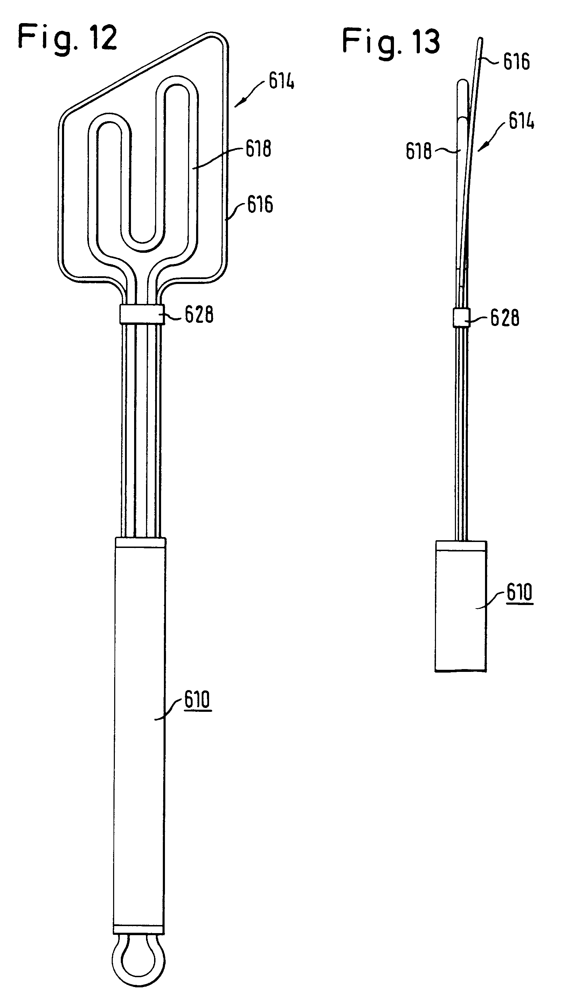

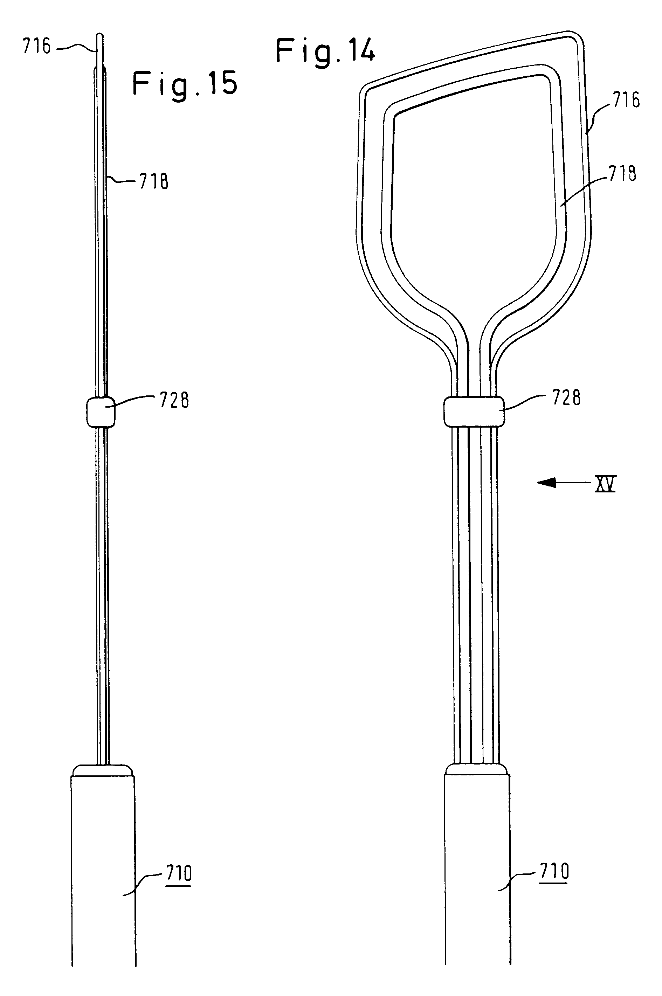

In Figuren 9, 10 und 11 ist eine weitere Ausführungsform dargestellt, wobei Figur 10 eine Ansicht in Pfeilrichtung X der Figur 9 ist und Figur 11 einen Schnitt nach Linie XI-XI der Figur 10 zeigt. Die Hülldrahtschlinge 616 umfaßt zwei orthogonal nach außen laufende Abschnitte 616b, zwei stielparallel verlaufende Abschnitte 616c und einen schräg verlaufenden Endabschnitt 616d. Die Zentraldrahtschlinge 618 verläuft wellenförmig mit zueinander parallelen Flanken 618s, welche durch Umkehrbiegungen 618b miteinander verbunden sind. Die Einhüllende der Zentraldrahtschlinge 618 ist annähernd äquidistant von der Hülldrahtschlinge 616. Längs des Stiels ist eine Feststellklammer 628 auf den Trägerschenkeln 616a und 618a verschiebbar. Dadurch kann die Auslenkungsweichheit der Hülldrahtschlinge 616 beeinflußt werden, wie aus Figuren 12 und 13 ersichtlich ist.

In Figuren 14 und 15 ist eine weitere Ausführungsform gezeigt, wobei Figur 15 eine Ansicht in Pfeilrichtung XV der Figur 14 darstellt. Man erkennt hieraus, daß die Anwendbarkeit der Klammer 728 auch bei anderen Schlingenformen der Hülldrahtschlinge und der Zentraldrahtschlinge möglich ist.

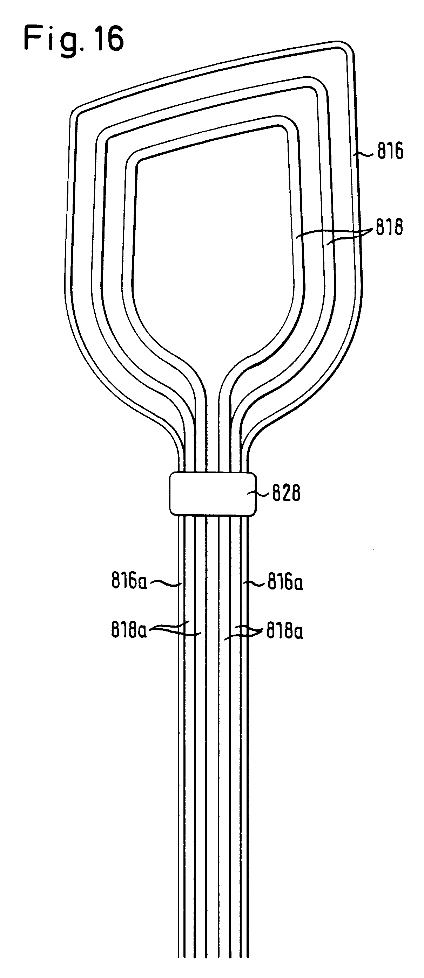

Aus Figur 16 erkennt man, daß das Prinzip der Feststellklammer 828 auch bei Verwendung mehrerer Zentraldrahtschlingen 818 möglich ist. Man erkennt weiter, daß man durch Vervielfachung der Zentraldrahtschlingen 818 den Rühreffekt verbessern kann.

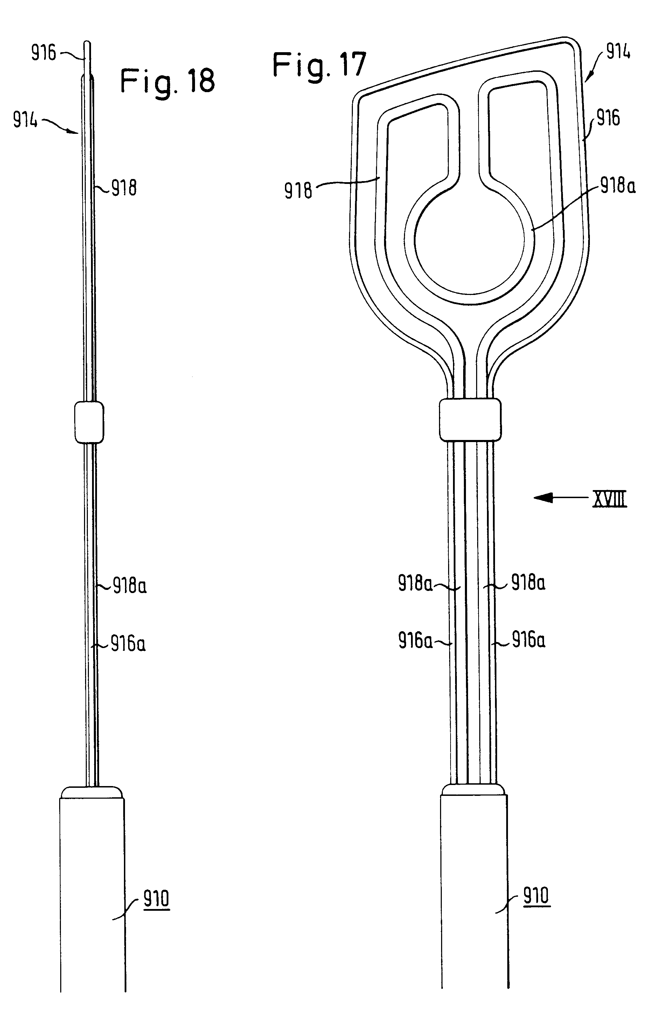

Aus Figuren 17 und 18, wo Figur 18 eine Ansicht entsprechend Pfeil XVIII der Figur 17 ist, erkennt man eine weitere Ausgestaltung der Zentraldrahtschlinge 918 mit einer nach innen eingezogenen sackartigen Verlängerung 918a.

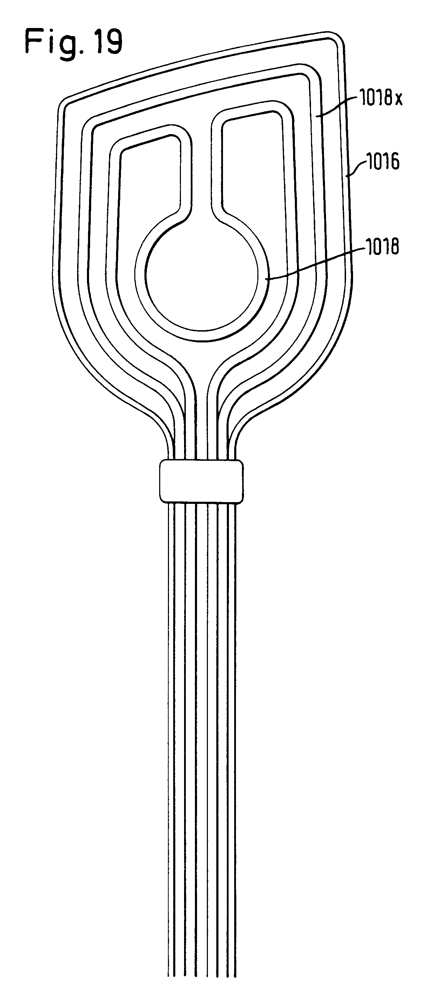

In Figur 19 erkennt man, daß eine innere Zentraldrahtschlinge 1018 mit einer der Hülldrahtschlinge 1016 ähnlichen weiteren Zentraldrahtschlinge 1018x kombiniert werden kann.

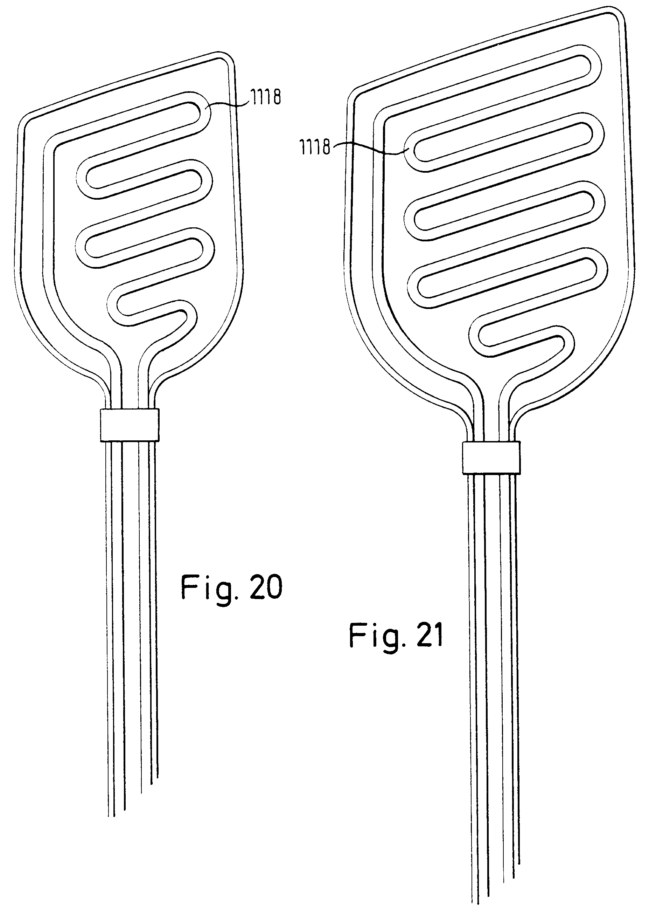

In Figuren 20 und 21 erkennt man weitere Formen von Zentraldrahtschlingen 1118 mit wellenförmigen Verlauf zur Vergrößerung des Durchflußwiderstands des Paddelzentralteils. Die Figuren 20 und 21 zeigen weiter, daß für unterschiedliche Kochgefäße die Kochlöffel in unterschiedlicher Größe angeboten werden können.

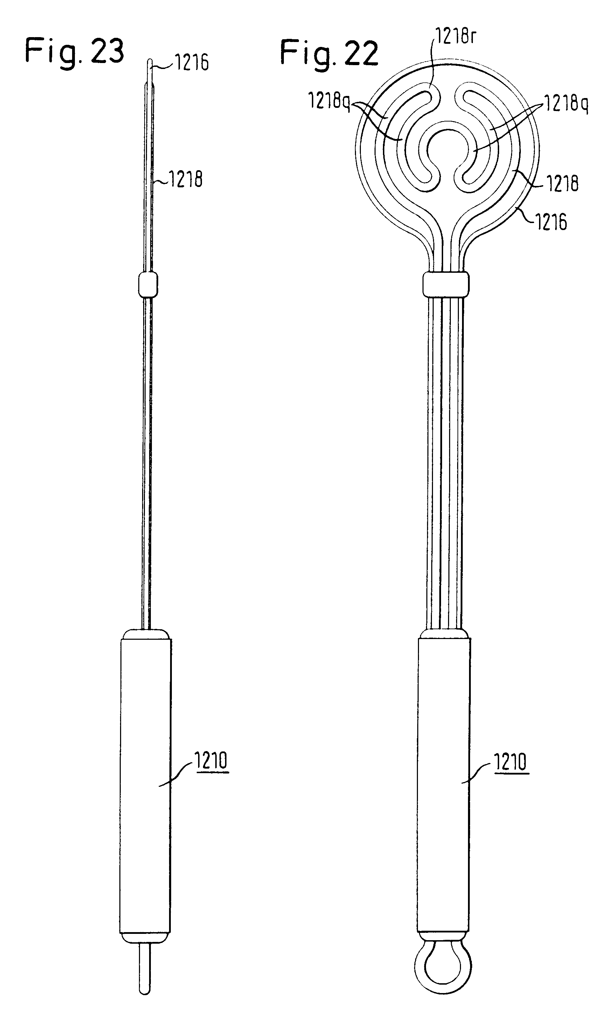

In Figuren 22 und 23 erkennt man in zwei um 90° verdrehten Seitenansichten eine Ausführungsform mit kreisförmiger Hülldrahtschlinge 1216 und einer Zentraldrahtschlinge 1218, die aus mehreren konzentrischen Bogenabschnitten 1218q sich zusammensetzt. Die Bogenabschnitte sind jeweils durch Umkehrkrümmungen 1218r miteinander verbunden und liegen alle in einer gemeinsamen Ebene mit der Hülldrahtschlinge 1216.

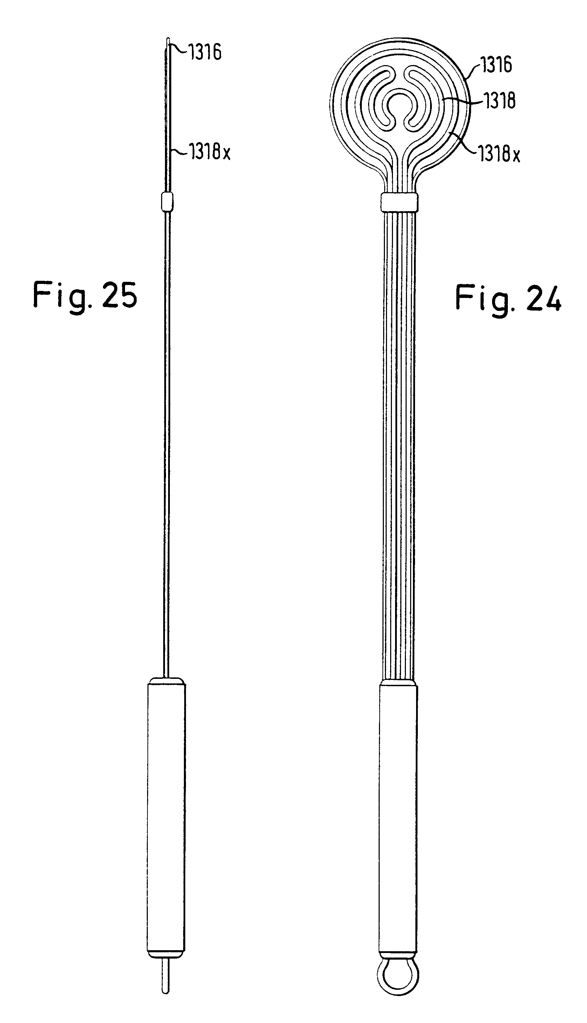

In Figuren 24 und 25 erkennt man, daß die Zentraldrahtschlinge 1318 mit einer weiteren Zentraldrahtschlinge 1318x kombiniert werden kann, welche der Hülldrahtschlinge 1316 äqudistant folgt.

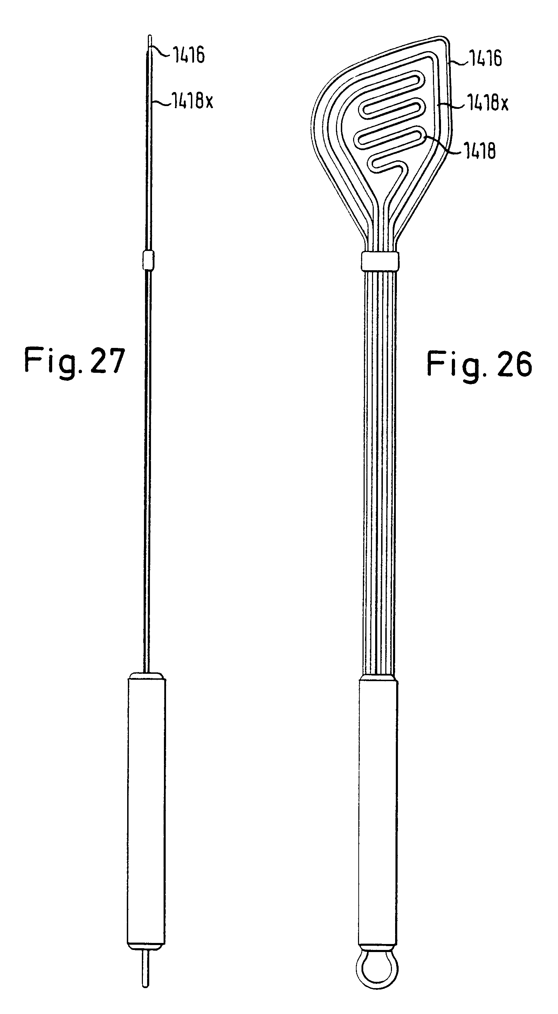

In Figuren 26 und 27 erkennt man eine Ausführungsform mit gewellter Zentraldrahtschlinge 1418 und zusätzlicher Zentraldrahtschlinge 1418x in einer Hülldrahtschlinge 1416. Der Wellenverlauf der Zentraldrahtschlinge 1418 ist hier dem Umriß der Zentraldrahtschlinge 1418x optimal angepaßt im Hinblick auf einen gleichmäßigen Durchflußwiderstand im Paddelzentralteil.

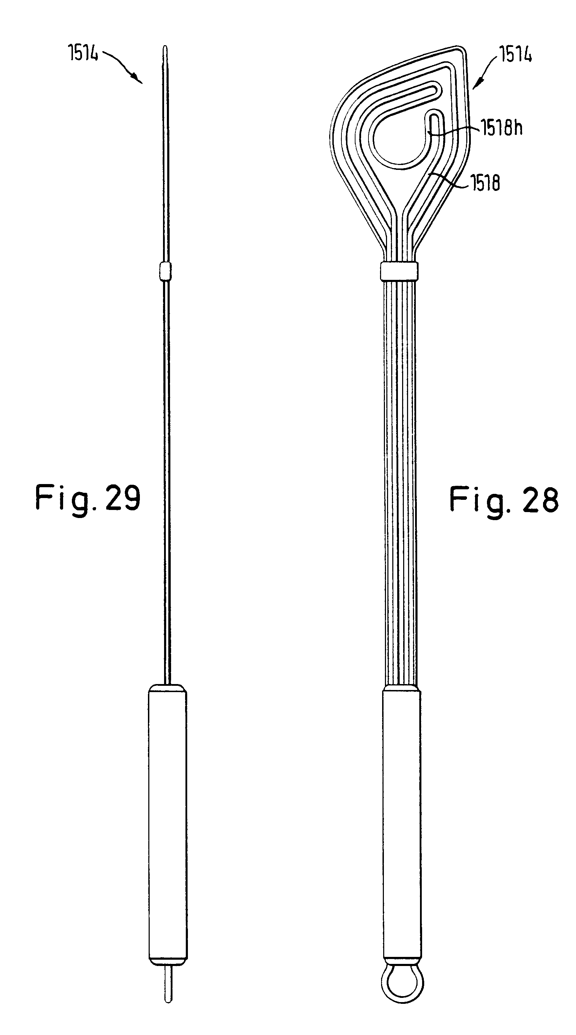

In Figuren 28 und 29 erkennt man eine weitere Paddelform 1514. Hier ist die innere Zentraldrahtschlinge 1518 mit einem eingezogenen Sack 1518h ausgeführt, so daß im Zentralbereich des Paddelteils 1514 ein geringerer Durchflußwiderstand auftritt als im Peripherbereich.

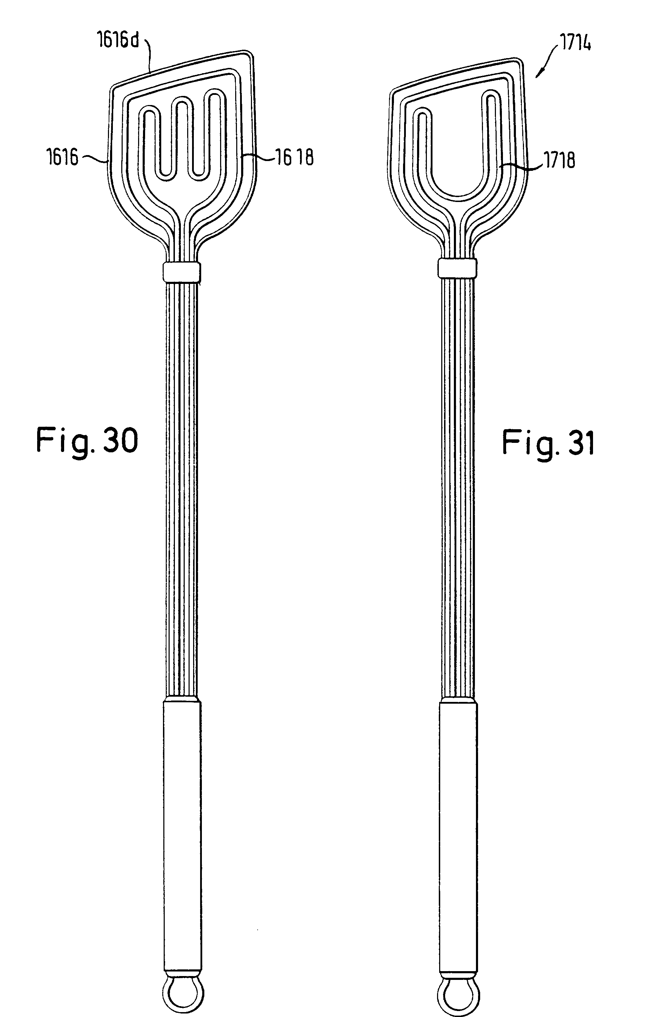

In Figur 30 erkennt man eine Ausführungsform ähnlich derjenigen nach Figuren 12 und 13, wobei jedoch der stielferne Abschnitt 1616d der Hülldrahtschlinge 1616 zum noch besseren Schutz gegen Kratzberührung konvex gekrümmt ist.

In Figur 31 erkennt man eine Kochlöffelform, bei der durch gabelartige Verformung der innersten Zentraldrahtschlinge 1718 ein großer Durchflußquerschnitt im Zentralbereich des Paddels 1714 geschaffen ist und im Peripherbereich der Durchflußquerschnitt eingeengt ist.

## Patentansprüche

1. Kochlöffel, insbesondere zum Rühren von Kochgut, umfassend einen Stiel (20) und ein Paddelteil (14), wobei das Paddelteil (14) ein Paddelzentralteil (18,122) und eine zumindest dem stielfernen Umfangsbereich des Paddelzentralteils (18,122) vorgelagerte Hülldrahtanordnung (16,116) mit stetig verlaufender Eingriffsliniengestaltung für den Eingriff mit Begrenzungsflächen eines Rührgutaufnahmegefäßes umfaßt, wobei die Hülldrahtanordnung (16,116) von einer einzigen Drahtschlinge gebildet ist,
**dadurch gekennzeichnet,**
daß die Biegesteifigkeit der das Paddelzentralteil (18,122) bildenden Elemente querschnittsbedingt größer ist als die Biegesteifigkeit der Hülldrahtanordnung (16,116), in dem das Paddelzentralteil (18,122) entweder von einem flächigen Material (122) oder von einem Zentraldrahtmaterial gebildet ist, welches insbesondere bei Betrachtung in Richtung senkrecht zur Paddelebene, im Querschnitt stärker ist als das entsprechende Querschnittsmaß des Hülldrahtmaterials (16).

2. Kochlöffel nach Anspruch 1,
**dadurch gekennzeichnet,**
daß die Hülldrahtschlinge (16) mit zwei einen Teil des Stiels bildenden Hülldrahtträgerschenkeln (16a) ausgeführt ist.

3. Kochlöffel nach Anspruch 1 oder 2,
**dadurch gekennzeichnet,**
daß das flächige Material innerhalb seines Außenumfangs reduzierten oder im wesentlichen keinen Durchfluß von Kochgut gestattet.

4. Kochlöffel nach Anspruch 1 oder 2
**dadurch gekennzeichnet,**
daß das Paddelzentralteil von mindestens einer Zentraldrahtschlinge (18) mit Zentraldrahtträgerschenkeln (18a) gebildet ist, welche einen Teil des Stiels (20) bilden.

5. Kochlöffel nach Anspruch 4,
**dadurch gekennzeichnet,**
daß die Zentraldrahtträgerschenkel (18a) der Zentraldrahtschlinge (18) und die Hülldrahtträgerschenkel (16a) der Hülldrahtschlinge (16) in einer Ebene parallel nebeneinander angeordnet sind und einen Teil des Stiels (20) bilden.

6. Kochlöffel nach Anspruch 4 oder 5,
**dadurch gekennzeichnet**
daß Hülldrahtträgerschenkel (16a) der Hülldrahtschlinge (16) an den Zentraldrahtträgerschenkeln (18a) gegen Ausweichen senkrecht zur Paddelfläche abgestützt sind.

7. Kochlöffel nach Anspruch 6,
**dadurch gekennzeichnet,**
daß die Hülldrahtträgerschenkel (616a) an den Zentraldrahtträgerschenkeln (618a) durch ein Stützelement (628) abgestützt sind, welches in Längsrichtung des Stiels (620) verschiebbar ist.

8. Kochlöffel nach einem der Ansprüche 1 bis 7,
**dadurch gekennzeichnet,**
daß die Paddelfläche (14) im wesentlichen plan und parallel zur Längserstreckung des Stiels (20) ist.

9. Kochlöffel nach einem der Ansprüche 1 bis 7,
**dadurch gekennzeichnet,**
daß die Paddelfläche (214) einen Knick (224) oder eine Krümmung bildet.

10. Kochlöffel nach Anspruch 9,
**dadurch gekennzeichnet,**
daß die Knickachse (224) bzw. Krümmungsachse im wesentlichen orthogonal zur Längserstreckung des Stiels (220) verläuft.

11. Kochlöffel nach einem der Ansprüche 1 bis 10,
**dadurch gekennzeichnet,**
daß der Stiel (20) mit einem Griff (10) versehen ist.

12. Kochlöffel nach Anspruch 11,
**dadurch gekennzeichnet,**
daß Hülldrahtträgerschenkel (16a) der Hülldrahtschlinge und/oder Trägerschenkel (18a) des Zentraldrahtmaterials (18) teilweise in den Griff (10) aufgenommen und in diesem ggf. teleskopierbar verankert sind.

13. Kochlöffel nach einem der Ansprüche 1 bis 12,
**dadurch gekennzeichnet,**
daß die Hülldrahtschlinge (16) tropfenförmig und zum Stiel hin verjüngt ist.

14. Kochlöffel nach einem der Ansprüche 1 bis 12,
**dadurch gekennzeichnet,**
daß die Hülldrahtschlinge (1216) im wesentlichen kreisförmig ist.

15. Kochlöffel nach einem der Ansprüche 1 bis 12,
**dadurch gekennzeichnet,**
daß die Hülldrahtschlinge (316) eine asymmetrische Hülldrahtschlinge (316) ist, welche auf der einen Seite der Stielachse (A) einen nach außen konvexen, kurvenförmigen Verlauf (316o) besitzt und auf der anderen Seite der Stielachse (A) einen zur Stielachse im wesentlichen parallelen Abschnitt (316p) besitzt.

16. Kochlöffel nach einem der Ansprüche 1 bis 12,
**dadurch gekennzeichnet,**
daß die Hülldrahtschlinge (516) eine symmetrische Hülldrahtschlinge (516) ist, welche sich vom Stiel (520) ausgehend zunächst erweitert (516b), sodann parallel beiderseits der Stielachse verläuft (516c) und am stielfernen Ende einen zur Stielachse im wesentlichen orthogonalen Abschnitt (516d) besitzt.

17. Kochlöffel nach einem der Ansprüche 1 bis 12,
**dadurch gekennzeichnet,**
daß die Hülldrahtschlinge eine asymmetrische Hülldrahtschlinge (616) ist, welche ausgehend vom Stiel zunächst orthogonal zur Stielachse von dieser in beiden Richtungen weg verläuft (616b), sodann beidseits der Stielachse im wesentlichen parallel zu dieser verläuft (616c) und im stielfernen Bereich durch einen spitzwinkelig zur Stielachse verlaufenden ggf. konvexen Abschnitt (616d) geschlossen ist.

18. Kochlöffel nach einem der Ansprüche 1 bis 17,
**dadurch gekennzeichnet,**
daß die Hülldrahtschlinge (16) im wesentlichen äquidistant zur Einhüllenden des Umfangs des Paddelzentralteils (18) verläuft.

19. Kochlöffel nach einem der Ansprüche 4 bis 18,
**dadurch gekennzeichnet,**
daß das Paddelzentralteil von einer Mehrzahl von Zentraldrahtschlingen (18) gebildet ist.

20. Kochlöffel nach Anspruch 19,
**dadurch gekennzeichnet,**
daß die Zentraldrahtschlingen (18) annähernd geometrisch ähnlich zur Hülldrahtschlinge (16) sind.

21. Kochlöffel nach einem der Ansprüche 4 bis 19,
**dadurch gekennzeichnet,**
daß das Paddelzentralteil mindestens eine in ihrer Ebene mehrfach gekrümmte Zentraldrahtschlinge (618) umfaßt.

22. Kochlöffel nach Anspruch 21,
**dadurch gekennzeichnet,**
daß die mehrfach gekrümmte Zentraldrahtschlinge (618) wellenförmigen Krümmungsverlauf besitzt.

23. Kochlöffel nach Anspruch 22,
**dadurch gekennzeichnet,**
daß die Wellenflanken (618s) im wesentlichen parallel zueinander sind.

24. Kochlöffel nach Anspruch 21,
**dadurch gekennzeichnet,**
daß die Zentraldrahtschlinge (1218) von mehreren Schlingenabschnitten (1218q) gebildet ist, welche in unterschiedlichen Abständen von der Hülldrahtschlinge (1216) angeordnet sind, der Hülldrahtschlinge (1216) jeweils annähernd äquidistant folgen und durch jeweils einen Umkehrscheitel (1218r) miteinander verbunden sind.

25. Kochlöffel nach einem der Ansprüche 1 bis 24,
**dadurch gekennzeichnet,**
daß das Hülldrahtmaterial (16) und ggf. das Zentraldrahtmaterial (18) aus Edelstahl hergestellt sind.

26. Kochlöffel nach einem der Ansprüche 1 bis 25,
**dadurch gekennzeichnet,**
daß ein Griff (10) des Stiels (20) aus Edelstahl hergestellt ist.

27. Kochlöffel nach einem der Ansprüche 1 bis 26,
**dadurch gekennzeichnet,**
daß das Paddelteil (14) mit einem Griff (10) wärmeisoliert verbunden ist.

28. Kochlöffel nach einem der Ansprüche 1 bis 27,
**dadurch gekennzeichnet,**
daß der Querschnittsdurchmesser des Hülldrahtmaterials (16) ca. 0,8 mm bis ca. 2,0 mm, vorzugsweise ca. 1,2 mm bis ca. 1,6 mm, beträgt.

29. Kochlöffel nach einem der Ansprüche 1, 2 + 4 bis 28,
**dadurch gekennzeichnet,**
daß der Querschnittsdurchmesser des Zentraldrahtmaterials (18) ca. 2,0 mm bis ca. 4,0 mm, vorzugsweise ca. 2,5 mm bis ca. 3,5 mm, beträgt.

30. Kochlöffel nach einem der Ansprüche 1, 2 + 4 bis 29,
**dadurch gekennzeichnet,**
daß das Paddelzentralteil (18) aus Drahtteilen unterschiedlichen Querschnittsdurchmessers besteht, wobei der Querschnittsdurchmesser vom Außenumfang des Paddelzentralteils zu dessen Mitte hin zunimmt.

## Claims

1. A cooking spoon, in particular for stirring material being cooked, comprising a handle (20) and a paddle part (14), wherein the paddle part (14) comprises a paddle central part (18,122) and an enveloping wire assembly (16,116) which is disposed at least outside the peripheral region of the paddle central part (18,122) remote from the handle and which has continuously extending line of engagement configuration for engagement with boundary surfaces of a vessel containing the material being stirred, the enveloping wire assembly (16,116) being formed by a single wire loop, characterised in that the bending strength of the elements forming the paddle central part (18,122) is higher, depending on the cross-section, than the bending strength of the enveloping wire assembly (16,116), since the paddle central part (18,122) is formed either by a planar material (122) or by a central wire material which, particularly when viewed in a direction perpendicular to the paddle plane, is thicker in cross-section than the corresponding cross-sectional dimension of the enveloping wire material (16).

2. A cooking spoon according to Claim 1, characterised in that the enveloping wire loop (16) is formed with two enveloping wire carrier arms (16a) forming a part of the handle.

3. A cooking spoon according to Claim 1 or 2, characterised in that within its outer periphery the planar material allows reduced or substantially no throughflow of material being cooked.

4. A cooking spoon according to Claim 1 or 2, characterised in that the paddle central part is formed by at least one central wire loop (18) with central-wire carrier arms (18a) which form a part of the handle (20).

5. A cooking spoon according to Claim 4, characterised in that the central-wire carrier arms (18a) of the central wire loop (18) and the enveloping wire carrier arms (16a) of enveloping wire loop (16) are disposed in one plane parallel and side by side and form a part of the handle (20).

6. A cooking spoon according to Claim 4 or 5, characterised in that enveloping wire carrier arms (16a) of the enveloping wire loop (16) are braced on the central-wire carrier arms (18a) against deflection perpendicular to the paddle surface.

7. A cooking spoon according to Claim 6, characterised in that enveloping wire carrier arms (616a) are braced on the central-wire carrier arms (18a) by a support element (628) which is displaceable in the longitudinal direction of the handle (620).

8. A cooking spoon according to any one of Claims 1 to 7, characterised in that the paddle surface (14) is substantially plane and parallel to the longitudinal extension of the handle (20).

9. A cooking spoon according to any one of Claims 1 to 7, characterised in that the paddle surface (214) forms a bend (224) or a curve.

10. A cooking spoon according to Claim 9, characterised in that the bend axis (224) or axis of curvature extends substantially orthogonal to the longitudinal extension of the handle (220).

11. A cooking spoon according to any one of Claims 1 to 10, characterised in that the handle (20) is provided with a grip (10).

12. A cooking spoon according to Claim 11, characterised in that enveloping wire carrier arms (16a) of the enveloping wire loop and/or carrier arms (18a) of the central wire material (18) are partly accommodated in the grip (10) and are anchored therein optionally in a telescopic manner.

13. A cooking spoon according to any one of Claims 1 to 12, characterised in that the enveloping wire loop (16) is tear-shaped and is tapered towards the handle.

14. A cooking spoon according to any one of Claims 1 to 12, characterised in that the enveloping wire loop (1216) is substantially circular.

15. A cooking spoon according to any one of Claims 1 to 12, characterised in that the enveloping wire loop (316) is an asymmetrical enveloping wire loop (316) which, on one side of the handle axis (A), has an outwardly convex, curved path (316o) and, on the other side of the handle axis (A), it has a portion (316p) substantially parallel to the handle axis.

16. A cooking spoon according to any one of Claims 1 to 12, characterised in that the enveloping wire loop (516) is a symmetrical enveloping wire loop (516) which initially widens (516b) starting from the handle (520), then extends (516c) parallel on either side of the handle axis and at the end remote from the handle it has a portion (516d) substantially orthogonal to the handle axis.

17. A cooking spoon according to any one of Claims 1 to 12, characterised in that the enveloping wire loop is an asymmetrical enveloping wire loop (616) which, starting from the handle, initially extends (616b) orthogonally to the handle axis away therefrom in both directions, then on both sides of the handle axis extends (616c) substantially parallel thereto and in the zone remote from the handle is closed by an optionally convex portion (616d) extending at an acute angle to the handle axis.

18. A cooking spoon according to any one of Claims 1 to 17, characterised in that the enveloping wire loop (16) extends substantially equidistantly with respect to the envelope curve of the periphery of the paddle central part (18).

19. A cooking spoon according to any one of Claims 4 to 18, characterised in that the paddle central part is formed by a plurality of central wire loops (18).

20. A cooking spoon according to Claim 19, characterised in that the central wire loops (18) are approximately geometrically symmetrical to the enveloping wire loop (16).

21. A cooking spoon according to any one of Claims 4 to 19, characterised in that the paddle central part comprises at least one central wire loop (618) multiply curved in its plane.

22. A cooking spoon according to Claim 21, characterised in that the multiply curved central wire loop (618) has an undulatory curve path.

23. A cooking spoon according to Claim 22, characterised in that the undulation flanks (618s) are substantially parallel to one another.

24. A cooking spoon according to Claim 21, characterised in that the central wire loop (1218) is formed by a plurality of loop portions (1218q) which are disposed at varying distances from the enveloping wire loop (1216), the enveloping wire loop (16) respectively follow approximately equidistantly and are joined to one another by a respective reversal apex (1218r).

25. A cooking spoon according to any one of Claims 1 to 24, characterised in that the enveloping wire material (16) and optionally the central wire material (18) are made from high-grade steel.

26. A cooking spoon according to any one of Claims 1 to 25, characterised in that a grip (10) of the handle (20) is made from high-grade steel.

27. A cooking spoon according to any one of Claims 1 to 26, characterised in that the paddle part (14) is connected with a handle (10) in a thermally insulated manner.

28. A cooking spoon according to any one of Claims 1 to 27, characterised in that the cross-sectional diameter of the enveloping wire material (16) is about 0.8 mm to about 2.0 mm, preferably about 1.2 mm to about 1.6 mm.

29. A cooking spoon according to any one of Claims 1, 2 and 4 to 28, characterised in that the cross-sectional diameter of the central wire material (18) is about 2.0 mm to about 4.0 mm, preferably about 2.5 mm to about 3.5 mm.

30. A cooking spoon according to any one of Claims 1, 2 and 4 to 29, characterised in that the paddle central part (18) consists of wire portions of different cross-sectional diameter, the cross-sectional diameter of the outer periphery of the paddle central part increasing towards its centre.

## Revendications

1. Cuiller de cuisine, en particulier pour remuer des aliments en train de cuire, comprenant un manche (20) et une partie formant spatule (14), la partie formant spatule (14) comprenant une partie centrale formant spatule (18, 122) et une partie extérieure en fil (16, 116), située devant au moins la zone circonférentielle, éloignée du manche, de la partie centrale formant spatule (18, 122), et présentant une forme de ligne de contact continue pour le contact avec la périphérie d'un récipient contenant les aliments remués, la partie extérieure en fil (16, 116) étant constituée d'une seule boucle en fil
caractérisée en ce que la rigidité flexionnelle des éléments constituant la partie centrale formant spatule (18, 122) est, en fonction de la section transversale, supérieure à la rigidité flexionnelle de la partie extérieure en fil (16, 116), dans la mesure où la partie centrale formant spatule (18, 122) est formée soit par un matériau plan (122) soit par un matériau filiforme formant la partie centrale qui, en particulier si on le regarde perpendiculairement au plan de la spatule, présente une section plus épaisse que la valeur de section correspondante du matériau filiforme formant la partie extérieure (16).

2. Cuiller de cuisine selon la revendication 1, caractérisée en ce que la boucle extérieure en fil (16) présente deux branches porteuses du fil formant la partie extérieure (16a) constituant une partie du manche.

3. Cuiller de cuisine selon la revendication 1 ou 2, caractérisée en ce que le matériau plan permet un passage réduit ou ne permet sensiblement pas de passage d'aliments à l'intérieur de sa circonférence extérieure.

4. Cuiller de cuisine selon la revendication 1 ou 2, caractérisée en ce que la partie centrale formant spatule est formée par au moins une boucle en fil formant la partie centrale (18) avec des branches porteuses du fil formant la partie centrale (18a), qui forment une partie du manche (20).

5. Cuiller de cuisine selon la revendication 4, caractérisée en ce que les branches porteuses du fil formant la partie centrale (18a) de la boucle en fil formant la partie centrale (18) et les branches porteuses du fil formant la partie extérieure (16a) de la boucle extérieure en fil (16) sont situées dans un seul plan, en parallèle les unes à côté des autres, et forment une partie du manche (20).

6. Cuiller de cuisine selon la revendication 4 ou 5, caractérisée en ce que les branches porteuses du fil formant la partie extérieure (16a) de la boucle extérieure en fil (16) sont appuyées sur les branches porteuses du fil formant la partie centrale(18a), afin d'empêcher qu'elles ne se déforment perpendiculairement à la surface de la spatule.

7. Cuiller de cuisine selon la revendication 6, caractérisée en ce que les branches porteuses du fil formant la partie extérieure (616a) sont appuyées sur les branches porteuses du fil formant la partie centrale(618a) par l'intermédiaire d'un élément d'appui (628), déplaçable dans la direction longitudinale du manche (620).

8. Cuiller de cuisine selon l'une des revendications 1 à 7, caractérisée en ce que la surface de la spatule (14) est sensiblement plane et parallèle à la direction longitudinale du manche (20).

9. Cuiller de cuisine selon l'une des revendications 1 à 7, caractérisée en ce que la surface de la spatule (214) forme un coude (224) ou une courbe.

10. Cuiller de cuisine selon la revendication 9, caractérisée en ce que l'axe du coude (224) ou l'axe de la courbe est sensiblement orthogonal à la direction longitudinale du manche (220).

11. Cuiller de cuisine selon l'une des revendications 1 à 10, caracterisée en ce que le manche (20) est pourvu d'une poignée (10).

12. Cuiller de cuisine selon la revendication 11, caractérisée en ce que des branches porteuses du fil formant la partie extérieure (16a) de la boucle extérieure en fil et/ou des branches porteuses (18a) du matériau filiforme formant la partie centrale (18) sont partiellement logées dans la poignée (10) et sont, le cas échéant, insérées de façon téléscopique dans celle-ci.

13. Cuiller de cuisine selon l'une des revendications 1 à 12, caractérisée en ce que la boucle extérieure en fil (16) présente une forme de goutte et se rétrécit en direction du manche.

14. Cuiller de cuisine selon l'une des revendications 1 à 12, caractérisé en ce que la boucle extérieure en fil (1216) est sensiblement circulaire.

15. Cuiller de cuisine selon l'une des revendications 1 à 12, caractérisée en ce que la boucle extérieure en fil (316) est une boucle extérieure en fil (316) asymétrique décrivant une forme (316o) courbe, convexe vers l'extérieur, d'un côté de l'axe (A) du manche, et possédant une partie (316p) sensiblement parallèle à l'axe du manche de l'autre côté de l'axe (A) du manche.

16. Cuiller de cuisine selon l'une des revendications 1 à 12, caractérisée en ce que la boucle extérieure en fil (516) est une boucle extérieure en fil (516) symétrique, allant tout d'abord en s'élargissant (516b), à partir du manche (520), s'étendant ensuite de façon parallèle (516c) de part et d'autre de l'axe du manche, et possédant une partie (516d) sensiblement orthogonale à l'axe du manche, au niveau de l'extrémité éloignée du manche.

17. Cuiller de cuisine selon l'une des revendications 1 à 12, caractérisée en ce que la boucle extérieure en fil est une boucle extérieure en fil (616) asymétrique qui, à partir du manche, s'éloigne (616b) de l'axe du manche dans les deux directions, de façon tout d'abord orthogonale à celui-ci, s'étend ensuite, de part et d'autre de l'axe du manche, de façon sensiblement parallèle (616c) à celui-ci, et se termine, dans la zone éloignée du manche, par une partie (616d) formant un angle aigu avec l'axe du manche, convexe le cas échéant.

18. Cuiller de cuisine selon l'une des revendications 1 à 17, caractérisée en ce que la bouche extérieure en fil (16) est sensiblement équidistante de l'enveloppe du pourtour de la partie centrale formant spatule (18).

19. Cuiller de cuisine selon l'une des revendications 4 à 18, caractérisée en ce que la partie centrale formant spatule est formée par une pluralité de boucles en fil formant la partie centrale (18).

20. Cuiller de cuisine selon la revendication 19, caractérisée en ce que les bouches en fil formant la partie centrale (18) présentent une forme géométrique approximativement similaire à la boucle extérieure en fil (16).

21. Cuiller de cuisine selon l'une des revendications 4 à 19, caractérisée en ce que la partie centrale formant spatule comprend au moins une boucle en fil formant la partie centrale (618) plusieurs fois recourbée dans son plan.

22. Cuiller de cuisine selon la revendication 21, caractérisée en ce que la bouche en fil formant la partie centrale (618) plusieurs fois recourbée décrit une courbe en forme d'onde.

23. Cuiller de cuisine selon la revendication 22, caractérisée en ce que les flancs (618s) des ondes sont sensiblement parallèles les uns aux autres.

24. Cuiller de cuisine selon la revendication 21, caractérisée en ce que la bouche en fil formant la partie centrale (1218) est formée de plusieurs parties de boucle (1218q), disposées à différentes distances de la boucle extérieure en fil (1216), qui suivent la boucle extérieure en fil (1216) de façon respectivement équidistante, et qui sont reliées les unes aux autres par un point d'inversion (1218r).

25. Cuiller de cuisine selon l'une des revendications 1 à 24, caractérisée en ce que le matériau filiforme formant la partie extérieure (16) et, le cas échéant, le matériau filiforme formant la partie centrale (18) sont constitués en acier inoxydable.

26. Cuiller de cuisine selon l'une des revendications 1 à 25, caractérisée en ce qu'une poignée (10) du manche (20) est constituée en acier inoxydable.

27. Cuiller de cuisine selon l'une des revendications 1 à 26, caractérisée en ce que la partie formant spatule (14) est reliée à une poignée (10) en étant isolée thermiquement.

28. Cuiller de cuisine selon l'une des revendications 1 à 27, caractérisée en ce que le diamètre de la section transversale du matériau filiforme formant la partie extérieure (16) se situe entre environ 0,8 mm et environ 2,0 mm, de préférence entre environ 1,2 mm et environ 1,6 mm.

29. Cuiller de cuisine selon l'une des revendications 1, 2 et 4 à 28, caractérisée en ce que le diamètre de la section transversale du matériau filiforme formant la partie centrale (18) se situe entre environ 2,0 mm et environ 4,0 mm, de préférence entre environ 2,5 mm et environ 3,5 mm.

30. Cuiller de cuisine selon l'une des revendications 1, 2 et 4 à 29, caractérisée en ce que la partie centrale formant spatule (18) est constituée de parties en fil de différents diamètres de section transversale, le diamètre de section transversale allant en augmentant du pourtour extérieur de la partie centrale formant spatule jusqu'à son centre.
